# EUROPÄISCHE PATENTSCHRIFT

(11) **EP 3 030 444 B1**
(45) Veröffentlichungstag und Bekanntmachung des Hinweises auf die Patenterteilung: **25.10.2017**
(21) Anmeldenummer: 14758076.5
(22) Anmeldetag: 01.08.2014
(51) Int. Cl.: B60K 17/22, B60K 17/342, B60K 17/344, B60K 17/10, F41H 7/04

(54) **FAHRZEUG**
VEHICLE
VÉHICULE

(30) Priorität: 09.08.2013 DE 102013108674
(43) Veröffentlichungstag der Anmeldung: 15.06.2016
(73) Patentinhaber: Krauss-Maffei Wegmann GmbH & Co. KG, 80997 München (DE)
(72) Erfinder: WEBER, Jürgen, 50968 Köln (DE); LIETZ, Roland, 80997 München (DE)
(74) Vertreter: Feder Walter Ebert
(86) Internationale Anmeldenummer: PCT/DE2014/100281
(87) Internationale Veröffentlichungsnummer: WO 2015/018395

(56) Entgegenhaltungen:
- EP-A1- 1 308 377
- EP-A1- 2 179 881
- EP-A2- 0 893 296
- EP-A2- 1 093 986
- DE-U1-202006 003 152
- US-A- 3 385 255
- US-A1- 2009 166 101
- US-A1- 2011 217 887

## Beschreibung

Die Erfindung betrifft ein Fahrzeug, insbesondere ein gepanzertes Fahrzeug, mit einem Motor und einer Antriebsachse, die auf gegenüberliegenden Seiten einer Fahrzeugzelle angeordnet und zur Übertragung der Antriebsenergie über eine Energieübertragungseinrichtung miteinander verbunden sind, die innen entlang einer Seitenwand der Fahrzeugzelle verläuft.

Üblicherweise weisen Fahrzeuge mit Allrad oder Heckantrieb vor der Fahrzeugzelle einen Motor und im Bereich der hinteren Fahrzeugzelle eine angetriebene Hinterachse auf. Die Antriebsenergie wird vom Motor über eine in einem Mitteltunnel liegende Welle zur Hinterachse geführt. Der Mitteltunnel ragt zumeist erheblich in den Fahrzeuginnenraum hinein.

Insbesondere im militärischen Bereich wird der Innenraum der Einsatzfahrzeuge in Abhängigkeit von der Aufgabe und der Mission des Fahrzeugs mit einer Vielzahl von technischen Geräten und Ausrüstungsgegenständen ausgerüstet.

Dabei hat sich ein mittig im Bodenbereich des Fahrzeugs in den Innenraum hineinragender Mitteltunnel als nachteilig erwiesen, da er die Freiheit zur Anordnung von Geräten und Ausrüstung sowie der Arbeitsplätze für die Besatzung im Innenraum erheblich beschränkt. Dem kann abgeholfen werden, indem der Innenraum vollständig über dem Mitteltunnel angeordnet wird. Dies bedingt allerdings eine allgemein nachteilige deutlich größere Bauhöhe des Fahrzeugs. Die US2011/0217887 A1, in der die Merkmale des Oberbegriffs von Anspruch 1 enthalten sind, offenbart ein Fahrzeug mit zwei Kettentrieben innerhalb des Fahrzeugs. Die der Erfindung zugrundeliegende Aufgabe ist es daher, ein Fahrzeug zu schaffen, welches eine größere Freiheit bei der Aufteilung und Ausrüstung der Fahrzeugzelle erlaubt.

Die Aufgabe wird bei einem Fahrzeug, das die Merkmale des Oberbegriffs des Anspruchs 1 aufweist, dadurch **gelöst,** dass die Energieübertragungseinrichtung nur an einer Seite innen entlang einer Seitenwand der Fahrzeugzelle verläuft, und dass das Fahrzeug zwei Umlenkgetriebe zum Übertragen der Antriebsenergie vom Motor auf die Energieübertragungseinrichtung und von der Energieübertragungseinrichtung auf die Antriebsachse aufweist. Dadurch, dass die Energieübertragungseinrichtung innen entlang einer Seitenwand der Fahrzeugzelle verläuft, muss kein Mitteltunnel im Mittelbereich der Fahrzeugzelle in den Innenraum hineinragen. Hierdurch wird eine erhebliche größere Freiheit bei Anordnung von Ausrüstung, Geräten und Fahrzeuginsassen in der Fahrzeugzelle erreicht. Es werden neue Innenausrüstungs-Konzepte bei insgesamt niedriger Fahrzeugaußenkontur ermöglicht.

Die Energieübertragungseinrichtung kann rechts und/oder links am Fahrzeug verlaufen. Dies kann auch unabhängig davon sein, ob der Antriebsmotor vorne oder hinten am Fahrzeug angeordnet ist.

In Weiterbildung der Erfindung ist die Energieübertragungseinrichtung in einem Seitenschweller der Fahrzeugzelle geführt. Es ergibt sich eine besonders platzsparende Anordnung.

Bevorzugt weist der Seitenschweller einen Hohlraum auf. Wird dieser für die Energieübertragungseinrichtung genutzt, ist es nicht notwendig, den Innenraum der Fahrzeugzelle weiter einzuschränken. Vorteilhafterweise kann die Energieübertragungseinrichtung auch zumindest im Bereich unter einer Türöffnung in der Fahrzeugzelle im Seitenschweller geführt sein. In diesem Bereich bildet der Seitenschweller einen Türschweller.

Der Seitenschweller kann ganz oder zumindest teilweise von dem Boden und der Seitenwand gebildet werden. Der Seitenschweller kann ein Strukturbauteil der insbesondere selbsttragend ausgebildeten Fahrzeugzelle sein. Er kann die Verwindungssteifigkeit des Fahrzeugs und/oder der Fahrzeugzelle erhöhen.

Erfindungsgemäß verläuft nur an einer Seitenwand der Fahrzeugzelle eine Energieübertragungseinrichtung zur Übertragung von Antriebsenergie auf eine Antriebsachse.

Bevorzugt ist die Fahrzeugzelle die äußere Hülle um den Fahrzeuginnenraum, insbesondere um den die Fahrzeugbesatzung aufnehmenden Innenraum. Die Energieübertragungseinrichtung kann innerhalb eines äußeren seitlichen Abschnitts der Fahrzeugzelle verlaufen. Es ergibt sich eine besonders platzsparende Anordnung.

Insbesondere kann der Fahrzeuginnenraum zusätzlich von einer inneren Hülle umschlossen sein. Die Energieübertragungseinrichtung kann dann an einer Seitenwand der äußeren Hülle oder an einer Seitenwand der inneren Hülle geführt sein.

Weiter bevorzugt ist die Fahrzeugzelle eine innere Hülle um den Fahrzeuginnenraum, insbesondere um den die Fahrzeugbesatzung aufnehmenden Innenraum.

In weiterer Ausgestaltung der Erfindung ist der Abstand der Energieübertragungseinrichtung zur Seitenwand gering. Bevorzugt beträgt der Abstand, insbesondere zumindest abschnittsweise, maximal 20% der Fahrzeugbreite, bevorzugt maximal 15%, besonders bevorzugt maximal 10% der Fahrzeugbreite. Durch einen geringen Abstand der Energieübertragungseinrichtung zur Seitenwand ragt dieselbe nur wenig in die Fahrzeugzelle, insbesondere nur am Rand derselben. Der Innenraum der Fahrzeugzelle lässt sich dann weitestgehend frei gestalten. Bevorzugt wird die Fahrzeugzelle durch eine Wanne des Fahrzeugs gebildet.

Insbesondere kann die Energieübertragungseinrichtung bodennah in der Fahrzeugzelle verlaufen. Bevorzugt unten in einem Winkel zwischen der Seitenwand und dem Boden. Auch dies ermöglicht viel Freiheit bei der Ausrüstung des Innenraums.

Weiter bevorzugt ist die Energieübertragungseinrichtung an der Seitenwand zum Innenraum hin abgekapselt angeordnet. Hierdurch wir ein besserer Schutz der Fahrzeugbesatzung im Falle einer Minenansprengung erreicht.

Gemäß einer Weiterbildung der Erfindung sind der Motor und/oder die Antriebsachse außerhalb der Fahrzeugzelle angeordnet. Insbesondere der Motor kann jedoch auch innerhalb der Fahrzeugzelle angeordnet sein.

Die Fahrzeugzelle kann zwischen dem Motor und der Antriebsachse angeordnet sein. Die Fahrzeugzelle kann mindestens einen Durchstoßpunkt aufweisen, durch welchen die Energieübertragungseinrichtung in die Fahrzeugzelle und/oder aus der Fahrzeugzelle herausgeführt ist. Die Energieübertragungseinrichtung kann dann durch die Fahrzeugzelle verlaufen. Die Durchstoßpunkte sind besonders bevorzugt an einer Vorderwand und/oder einer Rückwand und/oder einer Bodenwand der Fahrzeugzelle angeordnet.

In Weiterbildung der Erfindung erstreckt sich die Seitenwand der Fahrzeugzelle bevorzugt in Längsrichtung des Fahrzeugs. Sie kann im Wesentlichen senkrecht zum Fahrzeugboden verlaufen.

Die Fahrzeugzelle kann insbesondere durchgehend einen im Wesentlichen geraden Boden aufweisen. Durch eine ebene Ausbildung des Fahrzeugbodens wird ein maximaler Stauraum im Verhältnis zur Fahrzeughöhe erreicht.

Die Energieübertragungseinrichtung kann eine Welle, insbesondere eine Kardanwelle, eine Kette, ein Riemen oder Zahnriemen oder eine Hydraulikleitung sein. Im Falle, dass die Energieübertragungseinrichtung eine Hydraulikleitung ist, weist die Energieübertragungseinrichtung bevorzugt eine Hydraulikzuleitung und eine Hydraulikableitung auf.

Erfindungsgemäß weist das Fahrzeug zwei Umlenkgetriebe auf. Mit den beiden Umlenkgetrieben ist die Energie vom Motor auf die Energieübertragungseinrichtung und von der Energieübertragungseinrichtung auf die Antriebsachse übertragbar. Die Umlenkgetriebe übertragen das Motormoment vom Motor an die Seite der Fahrzeugzelle zur Energieübertragungseinrichtung und anschließend von der Seite der Fahrzeugzelle zu der Antriebsachse.

Das Fahrzeug kann mindestens eine weitere Antriebsachse aufweisen. Bevorzugt ist eine weitere Antriebsachse an demselben Ende der Fahrzeugzelle wie der Motor angeordnet. Das Fahrzeug kann somit eine angetriebene Vorderachse und eine angetriebene Hinterachse aufweisen. Besonders bevorzugt ist das Fahrzeug als Allradfahrzeug ausgebildet. Durch mehrere angetriebene Achsen wird die Geländegängigkeit des Fahrzeugs erhöht.

Ferner kann das Fahrzeug ein Verteilergetriebe aufweisen, welches bevorzugt hinter der Vorderachse angeordnet ist. Das Verteilergetriebe kann die Energie des Motors an die angetriebenen Achsen verteilen. In das Verteilergetriebe kann ein Umlenkgetriebe integriert sein.

In einer weiteren Ausgestaltung kann das Fahrzeug eine Hydraulikpumpe zum Wandeln des Motormoments in Hydraulikdruck zum Antreiben der Antriebsachse mit einem Hydraulikantrieb aufweisen. Bevorzugt bildet die Energieübertragungseinrichtung dann einen Hydraulikkreislauf zwischen der Hydraulikpumpe und dem Hydraulikantrieb. Der Hydraulikkreislauf weist dann eine Zuleitung und eine Ableitung für die Hydraulikflüssigkeit zum bzw. vom Hydraulikantrieb auf. Die Zuleitung und die Ableitung werden durch Hydraulikleitungen gebildet. Hydraulikleitungen können besonders einfach entlang einer Seite der Fahrzeugzelle verlegt werden.

Bevorzugt wird die weitere Antriebsachse, welche sich auf derselben Seite der Fahrzeugzelle befindet wie der Motor, direkt vom Motor angetrieben und die Antriebsachse auf der anderen Seite der Fahrzeugzelle über die Hydraulikpumpe und den Hydraulikantrieb.

Alternativ können auch die Antriebsachsen auf beiden Seiten der Fahrzeugzelle mittels eines Hydraulikantriebs angetrieben werden.

Des Weiteren kann der Motor zwischen einer Achse, insbesondere der Vorderachse, und der Fahrzeugzelle angeordnet sein. Bevorzugt ist auch ein Getriebe, insbesondere ein Schaltgetriebe, zwischen einer Achse, insbesondere der Vorderachse, und der Fahrzeugzelle angeordnet. Durch diese Anordnung wird ein großer Radstand ermöglicht. Es entsteht ein möglichst großer Abstand von den Rädern zur Fahrzeugzelle, wodurch die Sicherheit der Fahrzeuginsassen beim Überfahren einer Mine weiter gesteigert wird. Der Abstand zwischen der Achse und der Fahrzeugzelle kann weiter erhöht werden, indem zwischen der Achse und der Fahrzeugzelle zusätzlich zum Motor und/oder zum Schaltgetriebe das Verteilergetriebe und/oder die Hydraulikpumpe angeordnet ist.

Bevorzugt sind die Radaufhängungen Einzelradaufhängungen, sie können jedoch auch als Starrachse ausgebildet sein. Insbesondere sind auch Kombinationen aus Einzelradaufhängung und Starrachse möglich.

Der Motor kann ein Verbrennungsmotor oder eine Gasturbine sein. Er dient dem Bereitstellen der Antriebsenergie aus einem Brennstoff.

Ferner kann das Fahrzeug eine elektrische Lenkung aufweisen. Durch eine Steer-by-wire-Lenkung kann der Fahrerplatz sehr frei in der Fahrzeugzelle angeordnet werden. Es ist kein Lenkgestänge erforderlich, welches den Gestaltungsspielraum bei der Ausrüstung des Innenraums einschränkt.

Eine Weiterbildung des Fahrzeugs sieht vor, dass die Achsen die gleiche Spurweite haben. Hierdurch wird die Wahrscheinlichkeit einer Minenauslösung reduziert, da die Hinterräder zumindest bei der Geradeausfahrt in der Spur der Vorderräder fahren.

Weitere Einzelheiten eines erfindungsgemäßen Fahrzeugs werden nachfolgend anhand der beigefügten Zeichnungen von Ausführungsbeispielen erläutert. Darin zeigen:
- Fig. 1: eine schematische Draufsicht auf einen Antriebsstrang mit Fahrzeugzelle eines Fahrzeugs,
- Fig. 2: eine schematische Draufsicht auf einen Antriebsstrang mit Fahrzeugzelle eines weiteren Ausführungsbeispiels eines Fahrzeugs, und
- Fig. 3-7: schematische Darstellungen eines Querschnitts durch die Fahrzeugzelle eines Fahrzeugs.

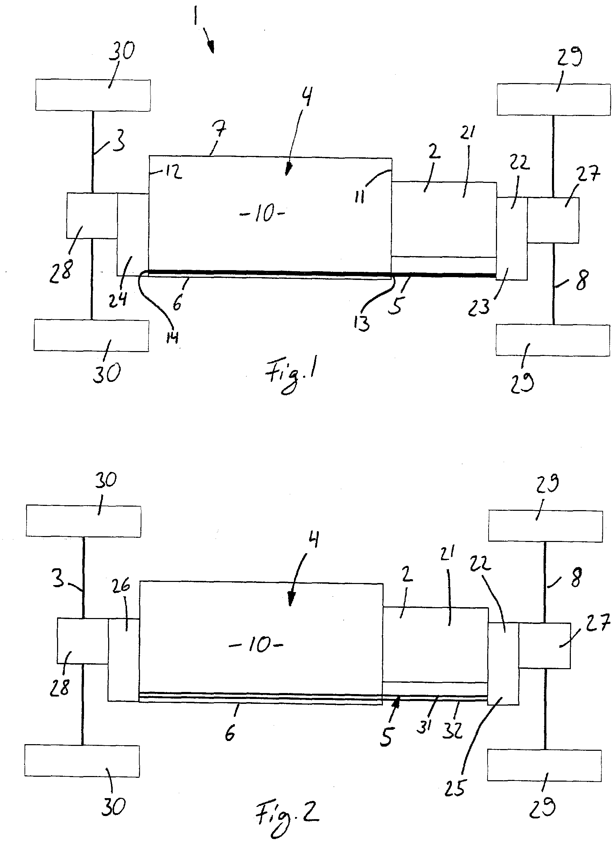

Die Fig. 1 zeigt eine schematische Draufsicht auf den Antriebsstrang eines erfindungsgemäßen Fahrzeugs 1. Im vorliegenden Fall handelt es sich um ein gepanzertes, militärisches Fahrzeug 1. Die Fahrzeugzelle 4 ist bevorzugt selbsttragend ausgebildet. Das Fahrzeug 1 ist in Leichtbauweise gebaut. Die Panzerung besteht aus Stahl-, Aluminium-, Carbon- und/oder Verbundpanzerungselementen. Die Fahrzeugzelle 4 kann auf einem Fahrgestell angeordnet sein. Bevorzugt ist die Fahrzeugzelle 4 verdrehfest gegenüber dem Fahrgestell und/oder einer Antriebsachse 7.

Das minengeschützte Fahrzeug 1 weist eine Fahrzeugzelle 4, einen Motor 2 und eine Antriebsachse 3 für die Räder 30 auf, ferner eine weitere, insbesondere angetriebene Achse 8 für die Räder 29. Die gepanzerte Fahrzeugzelle 4 umschließt einen die Besatzung des Fahrzeugs 1 sowie Ausrüstungsgegenstände und Geräte aufnehmenden Innenraum 10. Der Motor 2 ist auf der Vorderseite der Fahrzeugzelle 4 angeordnet und die Antriebsachse 3 auf der Rückseite der Fahrzeugzelle 4. Das Fahrzeug 1 hat einen Frontmotor.

In einem alternativen Ausführungsbeispiel kann der Motor 2 auch auf der Rückseite der Fahrzeugzelle 4 und die Antriebsachse 3 auf der Vorderseite der Fahrzeugzelle 4 angeordnet sein. In diesem Fall hat das Fahrzeug 1 einen Heckmotor.

Die Antriebsleistung des Motors 2 wird über die Energieübertragungseinrichtung 5 auf die Antriebsachse 3 übertragen. Die Energieübertragungseinrichtung 5 wird erfindungsgemäß innen entlang der Seitenwand 6 der Fahrzeugzelle 4 geführt.

In den Ausführungsbeispielen sind die Fahrzeuge allradgetrieben. Die Radaufhängungen sind als Einzelradaufhängungen ausgebildet. Die Achsen können alternativ auch alle oder teilweise als Starrachsen ausgebildet sein.

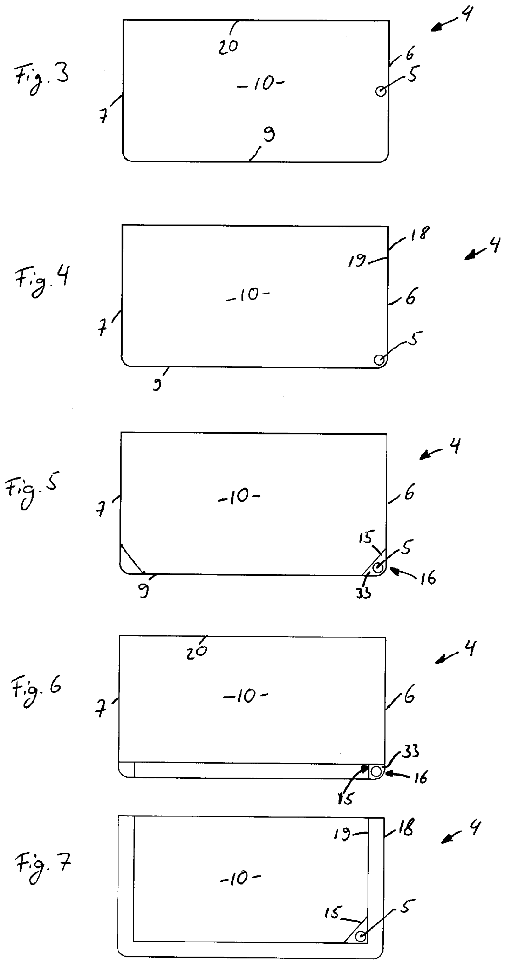

In den Fig. 3 bis 7 ist anhand verschiedener Ausführungsbeispiele gezeigt, wie die die Energieübertragungseinrichtung 5 entlang einer Seitenwand 6, 7 der Fahrzeugzelle 4 geführt sein kann.

In der Fig. 3 ist die Energieübertragungseinrichtung 5 in mittlerer Höhe entlang einer Seitenwand 6, 7 geführt. Die Energieübertragungseinrichtung 5 kann auch in geringem Abstand zum Dach 20 an einer Seitenwand 6, 7 geführt sein.

In der Fig. 4 ist die Energieübertragungseinrichtung 5 in dem Winkel 17 zwischen Boden 9 und einer Seitenwand 6, 7 geführt. Sie erstreckt sich im Bodenbereich entlang einer Seitenwand 6, 7. Diese Ausführung zeichnet sich dadurch aus, dass Sie eine deutlich freiere Ausgestaltung des Innenraums 10 ermöglich als die Ausgestaltung gemäß Fig. 3. Ein Einsteigen und Aussteigen durch eine Türöffnung in einer Seitenwand 6, 7 wird nicht behindert. Auch wenn nicht dargestellt, kann sich die Energieübertragungseinrichtung 5 auch im Deckenbereich entlang einer Seitenwand 6, 7 erstrecken. Auch in diesem Fall behindert sie das Ein- und Aussteigen nicht.

Gemäß den Ausführungsbeispielen der Fig. 5 bis 7 ist die Energieübertragungseinrichtung gekapselt im Fahrzeuginnenraum 10 angeordnet. Hierzu wird die Energieübertragungseinrichtung 5 von einer Kapselung 15 oder Verkleidung überdeckt.

In der Fig. 5 ist die Energieübertragungseinrichtung in einem Winkel zwischen dem Boden 9 und der Seitenwand 6, 7 geführt und wird durch die Kapselung 15 gegenüber dem Innenraum 10 abgeschirmt. Die Seitenwand 6, 7, die Kapselung 15 und der Boden 9 bilden den Seitenschweller 16, in dem die Energieübertragung 5 geführt ist.

Auch im Ausführungsbeispiel der Fig. 6 ist die Energieübertragungseinrichtung in einem Seitenschweller 16 geführt. Das Verlegen der Energieübertragungseinrichtung 5 durch einen Hohlraum 33 eines Seitenschwellers 16 hat den Vorteil, dass die Energieübertragungsvorrichtung 5 vom Innenraum 10 abgekapselt wird. Ferner kann ein ohnehin vorhandener Hohlraum 33 genutzt werden, so dass der Innenraum 10 nicht unnötig durch die Energieübertragungseinrichtung 5 weiter beschränkt werden muss.

Hier bildet der Seitenschweller 16 einen Teil einer Seitenwand 7 und die Kapselung 15. Zudem weist das Fahrzeug einen doppelten Boden zum besseren Schutz bei einer Minenansprengung auf.

In der Fig. 7 ist ein Fahrzeug mit einer äußeren Hülle 18 und einer inneren Hülle 19 dargestellt. Die Energieübertragungseinrichtung 5 ist innen an einer Seitenwand 6, 7 der inneren Hülle 19 angeordnet. Gekapselt wird die Energieübertragungseinrichtung 5 durch die Kapselung 15. Auch die innere Hülle 19 bildet einen Teil der Kapselung 15. Die Fahrzeugzelle 4 wird durch die äußere Hülle 18 gebildet. Diese umschließt ebenso wie die innere Hülle 19 den die Besatzung aufnehmenden Innenraum 10. Demnach fallen solche nicht gezeigten Ausführungsformen ebenfalls unter die Erfindung, bei welchen die Energieübertragungseinrichtung 5 zwischen der inneren Hülle 19 und der äußeren Hülle 18 innen entlang einer Seitenwand 6,7 der durch die äußere Hülle gebildeten Fahrzeugzelle 4 geführt sind. Dann kann die Kapselung 15 der Energieübertragungseinrichtung 5 auch durch die innere Hülle 19 und die äußere Hülle 18 gebildet werden.

Die Fahrzeugzelle 4 kann jedoch auch durch eine innere Hülle 19 gebildet werden.

Weist ein Fahrzeug 1 nur eine die Fahrzeugzelle 4 bildende Hülle auf, wie dies in den Fig. 3 bis 6 gezeigt ist, so bildet diese zugleich die äußere Hülle 18 und die innere Hülle 19.

Nachfolgend sollen die beiden Ausführungsbeispiele der Fig. 1 und 2 näher beschrieben werden. Beide Ausführungsbeispiel weisen zum Durchführen der Energieübertragungseinrichtung 5 durch die Fahrzeugzelle 4 in der Vorderwand 11 und in der Rückwand 12 der Fahrzeugzelle 4 jeweils einen Durchstoßpunkt 13, 14 auf. Es ist genau eine Energieübertragungseinrichtung 5 zum Übertragen der Antriebsenergie vom Motor 2 zu der Antriebsachse 3 durch die Fahrzeugzelle 4 geführt.

Bei dem Ausführungsbeispiel der Fig. 1 ist der Motor 2 mit einem Schaltgetriebe 21 vor der Fahrzeugzelle 4 angeordnet. Vom Motor 2 wird das Motormoment auf ein Verteilergetriebe 22 übertragen. Das Verteilergetriebe 22 weist eine Welle zum Übertragen der Antriebsenergie auf die Vorderachse 8 auf. Von dem Verteilergetriebe 22 wird das Antriebsmoment auf das Vorderachsdifferential 27 und die Räder 29 übertragen. Das Verteilergetriebe 22 ist zwischen der Achse 7 und dem Moor 2 angeordnet.

Ferner weist das Verteilergetriebe 22 ein Umlenkgetriebe 23 zum Übertragen der Antriebsenergie auf die Energieübertragungseinrichtung 5 auf. Auch das Umlenkgetriebe ist zwischen der Achse 7 und dem Motor 2 angeordnet. Die Energieübertragungseinrichtung 5 ist im Ausführungsbeispiel eine Kardanwelle. Alternativ kann die Energieübertragungseinrichtung 5 jedoch auch eine Welle, eine Kette, ein Riemen oder ein Zahnriemen sein. Mithilfe der Energieübertragungseinrichtung 5 wird die Antriebsenergie durch die Fahrzeugzelle 4 zu einer Antriebsachse 3 übertragen, welche auf der vom Motor 2 abgewandten Seite der Fahrzeugzelle 4 angeordnet ist. Das Umlenkgetriebe 24 überträgt die Antriebsenergie von der Energieübertragungseinrichtung 5 auf das Achsdifferential 28. Von hier wird die Antriebsenergie auf die Räder 30 übertragen.

Im Ausführungsbeispiel der Fig. 2 bilden Hydraulikleitungen die Energieübertragungseinrichtung. An die Vorderachse wird das Motormoment des Motors 2 über eine Welle übertragen.

Zur Übertragung der Antriebsenergie an die Antriebsachse 3, welche auf der vom Motor 2 abgewandten Seite der Fahrzeugzelle 4 angeordnet ist, weist das Fahrzeug 1 eine Hydraulikpumpe 25 auf. Mittels des von der Hydraulikpumpe 25 aufgebauten Drucks wird eine auf der von der Hydraulikpumpe 25 abgewandten Seite der Fahrzeugzelle 4 angeordneter Hydraulikantrieb 26 angetriebenen. Die Antriebsenergie wird über Hydraulikleitungen durch die Fahrzeugzelle 4 übertragen. Die Hydraulikleitungen bilden einen Kreislauf zwischen der Hydraulikpumpe 25 und dem Hydraulikantrieb 26. Die Energieübertragungseinrichtung weist eine Zuleitung 31 und eine Ableitung 32 zum Hydraulikantrieb 26 auf. Der Hydraulikantrieb 26 treibt über ein Achsdifferenzial die Räder 30 an.

Gemäß einem alternativen nicht gezeigten Ausführungsbeispiel kann eine vom Motor 2 angetriebene Hydraulikpumpe 25 auch die Antriebsenergie für mehrere Achsen bereitstellen. Eine Vorderachse und eine Hinterachse können je über einen Hydraulikantrieb 26 angetrieben werden.

Durch das Verlegen der Energieübertragungseinrichtung innen entlang einer Seitenwand der Fahrzeugzelle 4 wird eine große Freiheit bei der Anordnung von Geräten und Besatzung in der Fahrzeugzelle bei einer insgesamt niedrigen Fahrzeugsilhouette erreicht. Hierdurch können ganz neue Konzepte für die Innenausrüstung umgesetzt werden. Die Gestaltungsfreiheit bei der Ausrüstung des Innenraums kann durch eine elektrische Lenkung noch weiter gesteigert werden.

### Bezugszeichen:

- 1: Fahrzeug
- 2: Motor
- 3: Antriebsachse
- 4: Fahrzeugzelle
- 5: Energieübertragungseinrichtung
- 6: Seitenwand
- 7: Seitenwand
- 8: Achse
- 9: Boden
- 10: Innenraum
- 11: Vorderwand
- 12: Rückwand
- 13: Durchstoßpunkt
- 14: Durchstoßpunkt
- 15: Kapselung
- 16: Seitenschweller
- 17: Winkel
- 18: äußere Hülle
- 19: innere Hülle
- 20: Dach
- 21: Schaltgetriebe
- 22: Verteilergetriebe
- 23: Umlenkgetriebe
- 24: Umlenkgetriebe
- 25: Hydraulikpumpe
- 26: Hydraulikantrieb
- 27: Vorderachsdifferential
- 28: Hinterachsdifferential
- 29: Vorderräder
- 30: Hinterräder
- 31: Zuleitung
- 32: Ableitung
- 33: Hohlraum

- S: Spurweite

## Patentansprüche

1. Fahrzeug, insbesondere gepanzertes Fahrzeug (1), mit einem Motor (2) und einer Antriebsachse (3), die auf gegenüberliegenden Seiten einer Fahrzeugzelle (4) angeordnet und zur Übertragung der Antriebsenergie über eine Energieübertragungseinrichtung (5) miteinander verbunden sind, die innen entlang einer Seitenwand (6,7) der Fahrzeugzelle (4) verläuft,
**dadurch gekennzeichnet,**
**dass** die Energieübertragungseinrichtung nur an einer Seite innen entlang einer Seitenwand (6,7) der Fahrzeugzelle (4) verläuft, und
**dass** das Fahrzeug (1) zwei Umlenkgetriebe (23, 24) zum Übertragen der Antriebsenergie vom Motor (2) auf die Energieübertragungseinrichtung (5) und von der Energieübertragungseinrichtung (5) auf die Antriebsachse (3) aufweist.

2. Fahrzeug nach Anspruch 1, **dadurch gekennzeichnet, dass** die Energieübertragungseinrichtung (5) in einem Seitenschweller (16) und/oder Türschweller (16) der Fahrzeugzelle (4) geführt ist.

3. Fahrzeug nach einem der vorhergehenden Ansprüche, **dadurch gekennzeichnet, dass** die Fahrzeugzelle (4) eine äußere Hülle um den die Fahrzeugbesatzung aufnehmenden Innenraum (10) ist.

4. Fahrzeug nach einem der vorhergehenden Ansprüche, **dadurch gekennzeichnet, dass** die Fahrzeugzelle (4) durchgehend einen im Wesentlichen geraden Boden (9) aufweist.

5. Fahrzeug nach einem der vorhergehenden Ansprüche, **dadurch gekennzeichnet, dass** die Energieübertragungseinrichtung (5) an der Seitenwand (6, 7) zum Innenraum (10) hin abgekapselt angeordnet ist.

6. Fahrzeug nach einem der vorhergehenden Ansprüche, **dadurch gekennzeichnet, dass** die Energieübertragungseinrichtung (5) eine Welle, insbesondre Kardanwelle, eine Kette, ein Riemen oder Zahnriemen oder eine Hydraulikleitung ist.

7. Fahrzeug nach einem der vorhergehenden Ansprüche, **gekennzeichnet durch** mindestens eine weitere Antriebsachse (8).

8. Fahrzeug nach einem der vorhergehenden Ansprüche, **gekennzeichnet durch** eine Hydraulikpumpe (25) zum Wandeln des Motormoments in Hydraulikdruck zum Antreiben der Antriebsachse (3) mit einem Hydraulikantrieb (26).

9. Fahrzeug nach einem der vorhergehenden Ansprüche, **dadurch gekennzeichnet, dass** der Motor (2) zwischen einer Achse (8), insbesondere Vorderachse, und der Fahrzeugzelle (4) angeordnet ist.

10. Fahrzeug nach einem der vorhergehenden Ansprüche, **gekennzeichnet durch** eine elektrische Lenkung.

## Claims

1. Vehicle, in particular armoured vehicle (1), with an engine (2) and a drive axle (3), said engine and drive axle being arranged on opposite sides of a vehicle cell (4) and, for the transmission of the driving energy, being connected to each other via an energy transmission device (5) which runs on the inside along a side wall (6, 7) of the vehicle cell (4), **characterized in that** the energy transmission device runs on the inside along a side wall (6, 7) of the vehicle cell (4) only on one side, and **in that** the vehicle (1) has two deflection gearboxes (23, 24) for transmitting the driving energy from the engine (2) to the energy transmission device (5) and from the energy transmission device (5) to the drive axle (3).

2. Vehicle according to Claim 1, **characterized in that** the energy transmission device (5) is guided in a side sill (16) and/or door sill (16) of the vehicle cell (4).

3. Vehicle according to one of the preceding claims, **characterized in that** the vehicle cell (4) is an outer covering around the interior space (10) accommodating the vehicle crew.

4. Vehicle according to one of the preceding claims, **characterized in that** the vehicle cell (4) has a substantially rectilinear floor (9) throughout.

5. Vehicle according to one of the preceding claims, **characterized in that** the energy transmission device (5) is arranged encapsulated on the side wall (6, 7) towards the interior space (10).

6. Vehicle according to one of the preceding claims, **characterized in that** the energy transmission device (5) is a shaft, in particular cardan shaft, a chain, a belt or toothed belt or a hydraulic line.

7. Vehicle according to one of the preceding claims, **characterized by** at least one further drive axle (8).

8. Vehicle according to one of the preceding claims, **characterized by** a hydraulic pump (25) for converting the engine torque into hydraulic pressure for driving the drive axle (3) with a hydraulic drive (26).

9. Vehicle according to one of the preceding claims, **characterized in that** the engine (2) is arranged between an axle (8), in particular front axle, and the vehicle cell (4).

10. Vehicle according to one of the preceding claims, **characterized by** electric steering.

## Revendications

1. Véhicule, en particulier véhicule blindé (1), comprenant un moteur (2) et un essieu moteur (3), qui sont disposés sur des côtés opposés d'une cabine de véhicule (4) et qui sont connectés l'un à l'autre en vue du transfert de l'énergie d'entraînement par le biais d'un dispositif de transfert d'énergie (5) qui s'étend à l'intérieur le long d'une paroi latérale (6, 7) de la cabine de véhicule (4),
**caractérisé en ce que**
le dispositif de transfert d'énergie s'étend seulement au niveau d'un côté à l'intérieur le long d'une paroi latérale (6, 7) de la cabine de véhicule (4), et **en ce que** le véhicule (1) présente deux mécanismes de renvoi (23, 24) pour transférer l'énergie d'entraînement du moteur (2) au dispositif de transfert d'énergie (5) et du dispositif de transfert d'énergie (5) à l'essieu moteur (3).

2. Véhicule selon la revendication 1, **caractérisé en ce que** le dispositif de transfert d'énergie (5) est guidé dans un longeron de bas de caisse (16) et/ou un bas de porte (16) de la cabine de véhicule (4).

3. Véhicule selon l'une quelconque des revendications précédentes, **caractérisé en ce que** la cabine de véhicule (4) est une coque extérieure autour de l'habitacle (10) abritant l'équipage du véhicule.

4. Véhicule selon l'une quelconque des revendications précédentes, **caractérisé en ce que** la cabine de véhicule (4) présente en permanence un fond essentiellement droit (9).

5. Véhicule selon l'une quelconque des revendications précédentes, **caractérisé en ce que** le dispositif de transfert d'énergie (5) est disposé au niveau de la paroi latérale (6, 7) de manière encapsulée vers l'habitacle (10).

6. Véhicule selon l'une quelconque des revendications précédentes, **caractérisé en ce que** le dispositif de transfert d'énergie (5) est un arbre, en particulier un arbre à cardan, une chaîne, une courroie ou une couronne dentée ou une conduite hydraulique.

7. Véhicule selon l'une quelconque des revendications précédentes, **caractérisé par** au moins un essieu moteur supplémentaire (8).

8. Véhicule selon l'une quelconque des revendications précédentes, **caractérisé par** une pompe hydraulique (25) pour convertir le couple moteur en pression hydraulique pour entraîner l'essieu moteur (3) avec un entraînement hydraulique (26).

9. Véhicule selon l'une quelconque des revendications précédentes, **caractérisé en ce que** le moteur (2) est disposé entre un essieu (8), en particulier un essieu avant, et la cabine de véhicule (4).

10. Véhicule selon l'une quelconque des revendications précédentes, **caractérisé par** une direction électrique.
